# EUROPEAN PATENT SPECIFICATION

(11) **EP 1 444 075 B1**
(45) Date of publication and mention of the grant of the patent: **03.08.2005**
(21) Application number: 01982964.7
(22) Date of filing: 12.11.2001
(51) Int. Cl.: B27K 7/00, B67B 1/03

(54) **NEW PROCESS FOR TREATING CORK STOPPERS OR PLANKS FOR THE REDUCTION OF STRANGE AROMAS, NAMELY 2,4,6-TRICHOROANISOLE**
NEUE VERFAHREN ZUR BEHANDLUNG VON KORKSTOPFEN UND PLATTEN ZUR VERRINGERUNG DER FREMDEN AROMEN, NÄMLICH 2,4,6-TRICHOROANISOLE
NOUVEAU PROCEDE DE TRAITEMENT DE BOUCHONS OU DE PLANCHES DE LIEGE DESTINE A REDUIRE LES AROMES ETRANGES, NOTAMMENT LA 2,4,6-TRICHLOROANISOLE

(43) Date of publication of application: 11.08.2004
(73) Proprietor: Instituto Superior Técnico, 1096 Lisboa Codex (PT); Cork Supply Portugal, S.A., 4536-904 Santa Maria de Lamas (PT)
(72) Inventor: MOURA BORDADO, Jo o, Carlos, P-1096 Lisboa Codex (PT); SANTOS MARQUES, Jo o, Pedro, P-1096 Lisboa Codex (PT); PISSARRA GONCALVES, Miguel, Alfonso, P-1096 Lisboa Codex (PT); DE QUEIROS MONTENEGRO SOLLARI ALLEGRO, Isabel M., P-4536-904 Santa Maria de Lamas (PT); AVELAR LOPES CARDOSO MESQUITA, Ana, Cristina, P-4536-904 Santa Maria de Lamas (PT); LOPES FILIPE, Raquel, 4524-907 Rio Meao (PT)
(74) Representative: Cruz, Jorge Afonso
(86) International application number: PCT/PT2001/000028
(87) International publication number: WO 2003/041927

(56) References cited:
- EP-A- 0 395 010
- FR-A- 363 988
- FR-A- 1 016 755
- FR-A- 2 782 289
- FR-A- 2 798 879
- US-A- 4 463 024

## Description

### Field of application

This invention aims to recover cork stoppers lots that show to be highly contaminated with 2,4,6-trichloroanisole. These lots can not be used as such for the purpose of sealing wine bottles due to their effect in the sensory characters of the wine. Therefore, this invention allows to render an important value of the rejected lots.

### Background of the invention

Cork stoppers are used worldwide and for centuries for the stoppering of wine bottles.

The cork industry has grown according to the needs of the new markets but still deals with an important handicap: the occurrence of corks with strange aromas ("*off-aromas*") that may damage wine; this represents an important yearly cost both to the industry and to the wineries, the first due to the need of segregating the affected lots and the second due to the damage that from time to time is identified by the consumer in the wine bottles.

The inventors were involved in a research program called "NEUTRACORK" in which they developed the described invention to solve the problem of rejecting cork lots and to avoid the occurrence of wine bottles spoiled.

Subject directly related patents were not found. However there are a few patents describing processes applied to cork stoppers, but with different uses.

The european patent EP 0 279 206, granted in 24th October 1990, describe a process for sterilization of cork stoppers using water with ozone.

The European patent application EP 0 515 806, filed in 6th April 1992, describe a process for surface treatment of cork with glycerine to which a surfactant and silicon based emulsion are added for biological and chemical - physical protection of cork stoppers.

The European patent EP 0 465 830, granted in 25th January 1995, is related with a surface coating for hot and cold lubrication and plasticization of cork stoppers.

The European patent application EP 0 351 503, filed in 2nd May 1989, is related with a surface coating applied to cold bleaching treatment.

The European patent application EP 1 049 492, filed in 4th January 1999, describe the use of microwave radiation to sterilize, reduce chemical contaminants and to improve the polymerization, hardening and stabilization of adhesives in agglomerated corks.

The European patent application EP 0 853 533, filed in 3rd October 1996, concerns to a catalase solution able to neutralize peroxide residues on corks.

None of these patents solve the problem of the liquid phase extractions restrictions. The extraction in liquid phase couldn't be effective facing substances responsible for off-aromas, namely TCA, present in the interior of the cork stopper in areas where the washing solvents not even arrive, at feasible industrial extraction periods.

### Summary of the invention

The present invention concerns to a process in gas phase for extraction of TCA, and other volatile substances that can confer strange aromas to cork stoppers, during further use. The cited process consists in making an ethanolic current and water vapour pass through the cork stoppers, extracting TCA, and other related volatile substances.

### Description of the figures

Figure 1 concerns to a TCA vapour pressure versus temperature curve.
Figure 2 is a schematic diagram of the equipment in what A represent the pending bag, B represent the hook, C represent the internal I section beam, D represent the door and E represent the external I section beam.
Figure 3 is a schematic representation of the extraction equipment made out of glass and developed at laboratorial scale, in which A represents the vessel, B represents the extraction solvent, C the thermometer, D the reactor for corks, F the metallic net, G the condensor and H the collecting bulb.

### Detailed Description of the Invention

### 1. Object of the Invention

The object of the invention consists on a process for the extraction of strange aromas in cork stoppers or planks, comprising the use of gaseous mixtures essentially based on water vapour and an organic solvent vapour in presence of air, in a semi-continuous system.

In a preferred embodiment the organic solvent is an alcohol.

In a further more preferred embodiment the alcohol is ethanol.

The gaseous phase consists, usually, of a mixture of ethanol vapour, water vapour and air, in volumetric proportions from (2:10:88) to (20:75:5).

Preferably the gaseous phase consists of a mixture which proportions vary between (12:18:70) to (18:22:60).

The cork stoppers or planks are exposed to a current of circulating gas during a period from 10 minutes to 10 hours, Preferably during a period from 1 to 6 hours.

The process is usually performed at a temperature between 25 and 100 °C, preferably between 40 and 80 °C.

The pressure used take place from 0.01 to 2 bar, the atmospheric pressure being more advisable.

The cork stoppers or planks are put inside a perforated bag, composed by any net, perforated film, metallic wire or by another retention method that allows the progression of the gaseous current.

The cork stoppers are moved by mechanical device assuring that the gas does not exclusively go through preferential paths.

The gaseous mixture is previously produced and partially recirculated or removed immediately after going through the cork. The cooling of cork after treatment is made with air, either forced or exposed to natural convection.

The removed TCA, as well as other off-aroma compounds removed are retained in a gas washing system, either by contact in an absorption tower or by the use of a trap with liquid nitrogen or even by catalytic incineration of excess vapour.

### 2. Experimental part

This process was developed at lab pilot plant scale in a system that allowed to treat 250 cork stoppers in each batch. Analysis of results was based on the physical structure of the stoppers, on their sensory quality and sealing properties. It was confirmed that the level of volatile contaminants decreases from 20% to 80%, and that physical and sealing properties are preserved under the defined temperature and with no condensation of vapour on the stoppers.

The system under description has several analogies to the vapour degreasing operation usually applied to metallic pieces. This system does not adopt an horizontal rotative cylinder as per washing corks equipment: this was decided having in mind that these systems are not provided with adequate sealing parts in order to avoid vapour spoilage, even with the use of flange and soft seal; on the other hand, their pivoting axe beam and the cover itself would have to be reinforced to prevent distortion.

In gas phase extraction it is intended to make an alcohol (or another organic solvent) flow pass through the cork stoppers, particularly ethanol, and water vapour, with the aim of extracting TCA and other volatile compounds that may confer aromas during further use of the cork stopper.

Process parameters were achieved, following several trials, based on the following criteria:

### 2.1. Temperature

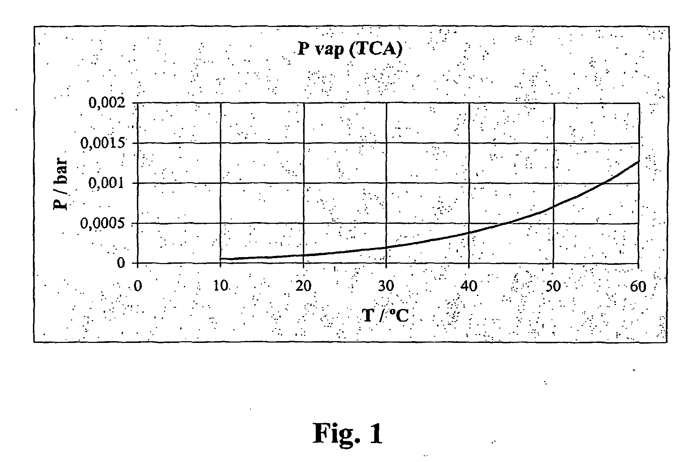

Temperature is an important parameter as:
it increases TCA vapour pressure (see figure 1).
it increases diffusion kinetics in the pores through 3 mechanisms:
   a) increases diffusion coefficient in liquid and solid phases
   b) increases diffusion promoting gradient
   c) slightly increases the permeability of intercellular septa

Preliminary tests demonstrated that at 70°C (and clearly at 80°C) there were irreversible distortions of the stoppers after cooling. Therefore process has to be undertaken 5 to 10 °C under the temperature at which distortions appear: it was decided to operate under 60°C; temperature at which no distortion occurred and favourable extraction was achieved.

### 2.2. Pressure

Vapour pressure curves for TCA would suggest that there would be some advantage in working under small pressure conditions. However, during preliminary tests corks presented distortion evidence after extraction.

It was then decided to adopt normal pressure: good extraction results were achieved and simultaneously there was a considerable cost reduction with the equipment when compared to the low pressure system.

### 2.3. Gaseous flow

Gaseous flow reduces the thickness of the laminar limit layer at the corks surface therefore promoting an effective concentration very low at the surface: this obviously increases the gradient promoting diffusion.

Gaseous ethanol/water flow is promoted by a compressed air flow applied to the chamber where the vapour mixture is induced. Flow was adjusted to 45 - 50 litres of compressed air/hour; however, it should be noted that this is a variable depending on the scale of the extraction system (preliminary tests were performed in a 5000 cm³ extraction chamber) and therefore should be optimised through pilot trials at industrial scale.

Besides this issue, it is important to assure that all stoppers are submitted to the gas flow: this can be difficult in a big dimension container (bag), mainly to the corks kept in the inside of the bag. Therefore it is very important that the stoppers container is "turned" several times in order to minimize the probability that some corks are not exposed to the gas flow.

### 2.4. Admission and extraction chamber dimensions

In logistic terms, it would be preferable to use bags as the ones that are used to transfer and temporarily store corks in the factory.

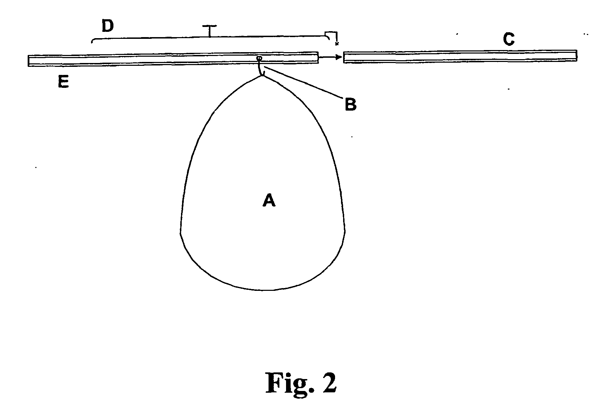

Due to the fact that these are rather big, the admission door should be at least 70 x 60 cm large, some height to be added for a moving beam to pass and transfer corks (see figure 2).

The seal door should be provided with a soft seal (similar to the used in submarines) and a system with cable and balance weight, or string balance weight (roller), for easy bag transfer (similar to the system used for handling heavy tools).

### 2.5. Time for extraction

The extraction time to remove TCA depends on several factors graded qualitatively according to Table 1:

**Table 1**

| Dependence of extraction | |
|---|---|
| ***Variable*** | ***Dependence degree*** |
| Temperature | Strong |
| Pressure | Strong |
| Gas flow | Medium |
| Corks dimensions | Weak |
| Gas composition | Weak |

For experimental tests conditions (extraction temperature = 60 °C; atmospheric pressure; air flow = 45 1/h) the optimal extraction time was 2 hours.

### 2.6. Heating system / Energy consumption

In conceptual terms, heating system for the extraction liquid to evaporate could be done with steam at 7bar (corresponding to ΔT ~65 °C), or using ohmic resistance in a sealed system.

The fact that heating with steam involves steam boiler facilities and industrial water treatment system (ionic permute), it seems to be easier and techno-economically more advantageous the use of electrical system.

Chamber shall have to be periodically submitted to chemical cleaning, (every 6 months).

In case steam boiler with natural gas is adopted, it would be possible to use part of the vented warm steam instead of air, therefore with considerable energy economy in the whole process. This would require fan with booster function, filter and mixing device, and control temperature to prevent over heating (at start or make-up).

### 3. Examples

Following examples aim to describe this invention are not to be limitating of its use.

### Example 1

The washing assays with injection of ozone in liquid phase took place as the following: assembly of the equipment (ozonator) with capacity to produce 5g/hr of ozone, adapted to the 50,000 cork stoppers washing drum. The experiences took place over a batch of 20,000 cork stoppers exposed to different washing conditions with aqueous solutions enriched in ozone. The washing water was totally recycled and being renewed every 30 minutes. The operating conditions are evident in next Table:

**Table 2**

| Test conditions for the comparative example | | | | |
|---|---|---|---|---|
| **Production of ozone** | 5 g/hour | | | |
| **Temperature** | Ambient | | | |
| **Pressure** | Atmospheric | | | |
| **Proportion per cork stopper** | From 0,06 to 1 mg/cork stopper | | | |
| **Time of contact** | 15 min | 1 hour | 5 hours | 11 hours |

These test have shown that the penetration of liquid phase is relatively reduced, from 1 to 2 mm after 6 hours. In areas of the cork stoppers with macroporosity, also observe a radial penetration regarding the pore not exceeding 2 mm.

Several assays in liquid phase were done and, although with some positive results, do not eliminate TCA totally.

### Example 2

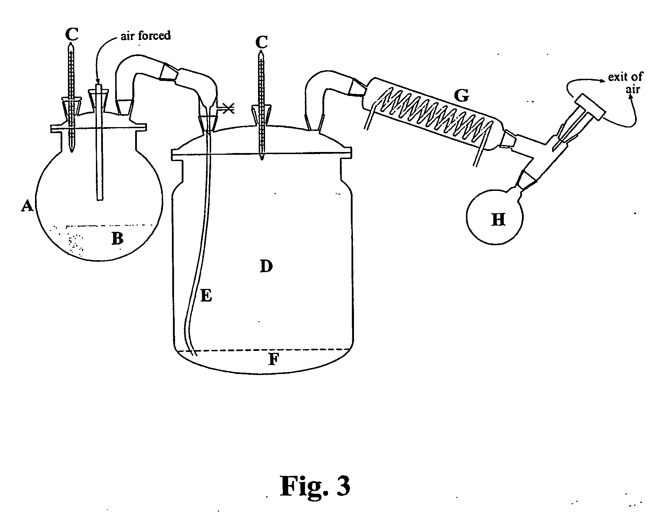

The extraction took place in a glass vapour extraction equipment designed for the purpose and with such geometry that condensation does not take place over where the corks are located, as schematised in figure 3.

A gaseous mixture composed by ethanol vapour and water vapour, pass through the net bag with cork stoppers, in a flow of 48 L/hr, for 1 hour, at atmospheric pressure and at 60 °C. The cork stoppers were revolved periodically to assure the same exposure to the gaseous current.

### Example 3 and 4

Following the procedure referred in example 2, several assays took place, at experimental conditions performed in Table 3.

**Table 3**

| Conditions under which extraction could be done | | | | |
|---|---|---|---|---|
| **Ex. Nr.** | **Time for extraction** | **Flow** | **Temperature** | **Pressure** |
| 3 | 2 hours | | | |
| 4 | 5 hours | | | |

### 4. Results

Samples were analysed in terms of their sensory quality: stoppers were, individually, immerged in 100 mL of white wine, during 24 hours, thereafter proceeded to olfactive assessment of the wine (comparative).

All specimens were analysed by a minimum of 3 assessors, the presence of TCA being positive whenever 2 of them coincide in the description of the aroma.

It was also analysed the occurrence of possible dimensional stability alteration of corks, through visual inspection and monitoring the dimensions of the corks before and after treatment.

The obtained results for these tests are compiled in table 4.

**Table 4**

| Description of corks submitted to treatment trials | | | |
|---|---|---|---|
| **Example** | **Sensory analysis for TCA %** | | **Distortion of Corks** |
| | **Before Extraction** | **After Extraction** | |
| 1 (Comparative) | 5.0 | 4.2 | Strong change of cork surface at 5 hours of treatment |
| 2 | 2.7 | 2.0 | Absent |
| 3 | 2.9 | 1.5 | Absent |
| | 3.8 | 1.3 | Absent |
| | 2.8 | 1.2 | Absent |
| 4 | 2.7 | 1.5 | Absent |
| | 5.8 | 2.4 | Absent |

### 5. Conclusions

It is possible to conclude using data from table 4 and the different trials that took place that statistical treatment of sensory analysis results show consistent improvement of residual levels of TCA in the examples corresponding to vapour phase extraction; same improvement is not observed in trials using ozone (example 1).

## Claims

1. Process for extraction of strange aromas in cork stoppers or planks, **characterized by** the use of a gaseous mixture based on water vapour and an organic solvent vapour, in presence of air, and working semi-continuously.

2. Process according to claim 1, **characterized in that** the organic solvent is an alcohol.

3. Process according to claim 2, **characterized in that** the mentioned alcohol is ethanol.

4. Process, according to any of claims 1 to 3, **characterized in that** the gaseous phase comprises a mixture of ethanol vapour, water vapour and atmospheric air in proportions from (2:10:88) to (20:75:5).

5. Process, according to claim 4, **characterized in that** the gaseous phase comprises proportions standing between (12:18:70) and (18:22:60).

6. Process, according to any of claims 1 to 5, **characterized in that** the cork stoppers or planks are exposed to a circulating gas flow for a period from 10min to 10 hours.

7. Process according to claim 6, **characterized in that** the cork stoppers or planks are exposed to the gaseous phase during a period from 1 to 6 hours.

8. Process, according to any of claims 1 to 7, **characterized in that** the process is made at a temperature from 25 to 100 °C.

9. Process according to claim 8, **characterized in that** the process is performed at a temperature from 40 to 80 °C.

10. Process, according to any of claims 1 to 9, **characterized in that** the process is performed at a pressure from 0.01 to 2 bar.

11. Process according to claim 10, **characterized in that** the process is performed at atmospheric pressure.

12. Process, according to any of claims 1 to 11, **characterized in that** the cork stoppers or planks are placed inside a perforated bag made out of any net, perforated film, metallic wire or any other method that allows to retain the cork products and to let the gaseous phase go in and out.

13. Process, according to any of claims 1 to 12, **characterized in that** a system where cork stoppers or planks are moved by any mechanical device assuring that the vapour phase does not exclusively go through preferential paths.

14. Process, according to any of claims 1 to 13, **characterized in that** the gaseous mixture is previously produced and partially recirculated or removed immediately after going through the cork

15. Process, according to any of claims 1 to 14, **characterized in that** cooling cork after treatment is made using air flow, either forced or exposed to natural convection.

16. Process, according to any of claims 1 to 15, **characterized in that** the removed TCA, as well as other compounds with aroma, are retained in a gas washing system, either by contact with a solution in an absorption tower or by retention in a system trap of liquid nitrogen, or even by catalytic incineration of excess vapour.

## Patentansprüche

1. Verfahren für die Enfernung von fremden Aromen aus Naturkorken und Korkplatten, bei dem Gasmischungen verwendet werden, die grundsätzlich aus Wasserdampf und Dampf eines organischen Lösungsmittel, an die Luft, in einem halbkontinueierlichen Vorgang.

2. Verfahren gemäß Patentanspruch 1, in dem das erwähnte Lösungsmittel ein Alkohol ist.

3. Verfahren gemäß Patentanspruch 2, in dem das erwähnte Alkohol Ethanol ist.

4. Verfahren gemäß Patentansprüche 1 bis 3, bei dem die erwähnte Gasmischung Ethanoldampf, Wasserdampf und Luft im Verhältnis von (2:10:88) bis (20:75:5) enthält.

5. Verfahren gemäß Patentanspruch 5, bei dem die erwähnten Verhältnisse zwischen (12:18:70) und (18:22:60) liegen.

6. Verfahren gemäß Patentansprüche 1 bis 5, bei dem die Korken oder Platten unter einem zirkulierenden Gasstrom für eine Zeit von 10 Minuten bis 10 Stunden gehalten werden.

7. Verfahren gemäß Patentanspruch 6, bei dem die Korken oder Platten unter einem zirkulierenden Gasstrom für eine Zeit von 1 bis 6 Stunden gehalten werden.

8. Verfahren gemäß Patentansprüche 1 bis 7, bei dem der Vorgang mit einer Temperatur zwischen 25° und 100°C durchgeführt wird.

9. Verfahren gemäß Patentansprüche 1 bis 7, bei dem der Vorgang mit einer Temperatur zwischen 40 e 80 °C durchgeführt wird.

10. Verfahren gemäß Patentansprüche 1 bis 9, bei dem der Vorgang mit einem Druck zwischen 0,01 und 2 bar erfolgt.

11. Verfahren gemäß Patentanspruch 10, bei dem der Vorgang bei Luftdruck erfolgt.

12. Verfahren, gemäß Patentansprüche 1 bis 11, bei dem die Korken oder Platten sich in einem durchlässigen Beutel aus Netz, durchlässiger Folie, Metalldraht oder einem anderen Festhalteverfahren, die den Gasstrom durchlässt, befinden.

13. Verfahren, gemäß Patentansprüche 1 bis 12, bei dem die Korken durch mechanische Mittel befördert werden, damit das Gas nicht fortlaufend durch die selben Stellen strömt.

14. Verfahren, gemäß Patentansprüche 1 bis 13, bei dem die Gasmischung im Voraus hergestellt wird und zum Teil unmittelbar nach dem Durchlauf durch den Korken wieder in Durchlauf gebracht oder entfernt wird.

15. Verfahren, gemäß Patentansprüche 1 bis 14, in dem die Kühlung des Korks nach der Behandlung durch einem Luftstrom vorgenommen wird, entweder durch einen künstlich hergestellten Luftstrom oder durch natürliche Konvektion.

16. Verfahren, gemäß Patentansprüche 1 bis 15, durch das das entfernte TCA sowie die weiteren Teile, die ein Aroma aufweisen, durch ein Gasreinigungssystem zurückgehalten werden, sei es duch Kontakt mit einer Mischung in einem Absorptionsturm, durch Zurückhaltung in einem "*trap*"-System aus flüssigem Stickstoff oder durch katalitische Verbrennung des Dampfüberschusses.

## Revendications

1. Processus pour l'extraction d'odeurs étrangères des bouchons ou plaques d'écorce qui se **caractérise par** l'utilisation de mélanges gazeux essentiellement constitués par de la vapeur d'eau et la vapeur d'un solvant organique en présence d'air, de façon semi continue.

2. Processus selon la revendication 1 où le solvant organique en question est un alcool.

3. Processus selon la revendication 2 où l'alcool en question est de l'éthanol.

4. Processus selon n'importe quelle revendication allant de 1 à 3 où le mélange gazeux en question est composé de vapeur d'éthanol, vapeur d'eau et air atmosphérique, selon les proportions de (2:10:88) jusqu'à (20:75:5).

5. Processus selon la revendication 4 où les proportions en question se situent entre (12:18:70) et (18:22:60).

6. Processus selon n'importe quelle revendication allant de 1 à 5 où les bouchons ou plaques d'écorce sont placés dans des courants de gaz circulant pendant une période allant de 10 minutes à 10 heures.

7. Processus selon la revendication 6 où les bouchons ou plaques d'écorce sont placés dans un courant de gaz circulant pendant une période allant de 1 à 6 heures.

8. Processus selon n'importe quelle revendication allant de 1 à 7 où le processus est mis en place à une température située entre 25 et 100 °C.

9. Processus selon la revendication 8 où le processus est mis en place à une température située entre 40 et 80°C.

10. Processus selon n'importe quelle revendication allant de 1 à 9 où le processus est mis en place à une pression située entre 0,01 et 2 bar.

11. Processus selon la revendication 10 où le processus est mis en place selon la pression atmosphérique.

12. Processus selon n'importe quelle revendication allant de 1 à 11 où les bouchons ou plaques d'écorce sont placés dans un sac perforé, constitué d'un filet, d'une pellicule perforée, de fil métallique ou toute autre méthode de rétention et où le courant gazeux parvient à passer.

13. Processus selon n'importe quelle revendication allant de 1 à 12 où les bouchons sont mobilisés par le biais de moyens mécaniques afin de s'assurer que le gaz ne passe pas que par des chemins préférentiels.

14. Processus selon quelconque revendication allant de 1 à 13 où le mélange gazeux est produit au préalable et où il est partiellement recirculé ou enlevé immédiatement après le passage par le liège.

15. Processus selon quelconque revendication allant de 1 à 14 où le refroidissement du liège après le traitement est effectué en courant d'air, que se soit de façon forcée ou par exposition à la convention naturelle.

16. Processus selon n'importe quelle revendication allant de 1 à 15 où le TCA enlevé, ainsi que les autres composés aromatiques, sont retenus dans un système de lavage de gaz, que se soit par le contact avec une solution dans une tour d'absorption ou par rétention dans un système de piège d'azote liquide, ou bien encore par incinération catalytique de l'excès de vapeur.
